# FASCICULE DE BREVET EUROPEEN

(11) **EP 3 353 843 B1**
(45) Date de publication et mention de la délivrance du brevet: **01.01.2020**
(21) Numéro de dépôt: 16777555.0
(22) Date de dépôt: 19.09.2016
(51) Int. Cl.: H01M 10/0525, H01M 10/0567, H01M 10/0569, H01M 10/0568

(54) **ELECTROLYTE LIQUIDE HYDROCARBONE**
FLÜSSIGER KOHLENWASSERSTOFFELEKTROLYT
HYDROCARBON LIQUID ELECTROLYTE

(30) Priorité: 21.09.2015 FR 1558851
(43) Date de publication de la demande: 01.08.2018
(73) Titulaire: Commissariat à l'Énergie Atomique et aux Énergies Alternatives, 75015 Paris (FR)
(72) Inventeur: IORDACHE, Adriana, 38000 Grenoble (FR); PICARD, Lionel, 38170 Seyssinet-Pariset (FR); SOLAN, Sébastien, 38170 Seyssinet-Pariset (FR)
(74) Mandataire: Nony
(86) Numéro de dépôt international: PCT/EP2016/072130
(87) Numéro de publication internationale: WO 2017/050681

(56) Documents cités:
- US-A1- 2002 045 101
- US-A1- 2011 212 362
- US-A1- 2015 024 267

## Description

La présente invention concerne le domaine des batteries, notamment Li-ion, et vise plus particulièrement à proposer un nouvel électrolyte pour celles-ci.

Un électrolyte est un conducteur ionique indispensable dans un système électrochimique car il assure le transport de charges ioniques entre les électrodes. Les électrolytes liquides classiques sont composés d'un sel support dissous dans un solvant ou un mélange de solvants organiques.

Le sel support dissous dans le solvant doit assurer la meilleure conductivité ionique possible.

Quant au milieu solvant associé, il doit satisfaire à plusieurs exigences. Il doit posséder une faible viscosité, demeurer liquide sur une large gamme de température, être doté d'une constante diélectrique élevée afin de favoriser la dissociation du sel support associé et bien entendu être électro-chimiquement stable sur un large domaine d'électro-activité.

D'une manière générale, aucun solvant ne permet à lui seul d'atteindre toutes ces propriétés et il est souvent nécessaire de mélanger plusieurs solvants pour répondre à l'ensemble de ces attentes.

Le document US 2002/0045101 décrit un électrolyte pour une batterie lithium-soufre, comprenant un premier solvant présentant une solubilité du soufre supérieure à 20 mM, un second solvant avec une solubilité du soufre inférieure à 20 mM, un troisième solvant avec une constante diélectrique et une viscosité élevées, et un sel électrolyte.

Le document US 2015/024267 propose un électrolyte pour un accumulateur, comprenant un composé aromatique de formule spécifique, un sel électrolyte et un solvant organique non aqueux pouvant être par exemple un carbonate d'éthylène ou un carbonate de propylène.

Quant au document US 2011/212362, il décrit un accumulateur Li-ion, comprenant un électrolyte contenant un sel électrolyte, du dioxane, de l'adiponitrile et du cycloalkylbenzène.

Pour des raisons évidentes, l'optimisation des performances des batteries Li-ion relève d'un objectif permanent.

Récemment, il a été constaté que les alcanes ayant une longueur de chaîne de 2 à 16 atomes de carbone possèdent des différences énergétiques entre les orbitales HOMO et LUMO supérieures à 8 V, et donc un très large domaine de stabilité électrochimique, supérieur à 8 V (Cuevas et al. Molecular Electronics An Introduction to Theory and Experiment; 2010; Vol. 1). En conséquence, les liquides hydrocarbonés, tels que les alcanes, sont potentiellement de très bons solvants pour préparer des électrolytes stables à haute et basse tension.

Malheureusement, ces solvants ont un très mauvais pouvoir solubilisant. Or, comme énoncé précédemment, l'utilisation de ces solvants dans un électrolyte, impose que le sel support conjointement considéré y soit présent sous une forme soluble.

Les sels organiques de métaux alcalins comportant de longues chaines aliphatiques (c'est-à-dire plus de 6-8 atomes de carbone) sont potentiellement solubles dans les liquides hydrocarbonés. L'étude de la dissolution des sels alcalins des acides gras dans des solvants hydrocarbonés a également permis de constater que les carboxylates des acides gras, lorsqu'ils sont considérés individuellement, sont très peu solubles, voire insolubles, dans les liquides hydrocarbonés, tel que les hydrocarbures aromatiques (benzène et toluène) ou les hydrocarbures aliphatiques, comme les paraffines, les oléfines, l'heptane, et l'isooctane. En revanche, ces sels peuvent augmenter mutuellement leur solubilité si on les met en œuvre sous la forme d'un mélange de trois à quatre sels (Sandy et al. Mixture of alkali metal salts of fatty acids having improved solubility in liquid hydrocarbons, June 26, 1962). Kissa *et al.* (Kissa et al. J. Colloid Sci. 1963, 18 (2), 147) a également montré qu'il est possible de solubiliser un cristal mixte ayant la composition carboxylate de potassium/acide gras correspondant dans un liquide hydrocarboné. Toutefois, l'échelle de solubilisation de ce carboxylate dépend fortement de la structure de l'anion associé.

En conséquence, il ressort de ce qui précède que les sels carboxylates de lithium, potassium et sodium des acides gras correspondants sont très peu solubles dans les liquides hydrocarbonés. Pour leur part, les sels de métaux alcalins ou alcalino-terreux, usuellement utilisés comme sel support, sont insolubles dans les liquides hydrocarbonés.

La présente invention a précisément pour objectif de proposer un moyen permettant de remédier à ce défaut de solubilité des sels de métaux alcalins ou alcalino-terreux, usuellement utilisés comme sel support, dans des liquides hydrocarbonés.

Elle vise également à proposer un nouveau milieu électrolyte présentant une stabilité électrochimique accrue à haute et basse tension, comparativement aux électrolytes conventionnels, et en particulier compatible avec une utilisation à des potentiels s'étendant de 0,01 à 4,4 V.

Ainsi, la présente invention vise un milieu électrolyte monophasique comprenant :
- au moins un sel support de métal alcalin ou alcalino-terreux, de préférence un sel de lithium,
- au moins un solvant hydrocarboné, en particulier en C₆ à C₁₈, et
- de 1 à 50 %, en volume par rapport au volume total dudit milieu, d'au moins un agent solubilisant hydrocarboné, distinct dudit solvant hydrocarboné, répondant à la formule (I) :

   Z-[(A)-(X)]_{q}-(B)-Y (I)

   dans laquelle :
   - A et B, identiques ou différents, ont pour formule -CₐH₂ₐ-, a étant un entier compris entre 6 et 18,
   - X est choisi parmi les atomes d'oxygène et de soufre, et les radicaux -N(R²)-, -B(R²)- et -P(R³R²)- avec R² et R³, identiques ou différents, représentant un atome d'hydrogène ou un radical alkyle en C₁ à C₄,
   - q est égal à zéro ou est un entier variant de 1 à 8, avec A et X pouvant posséder des définitions, identiques ou différentes, dans chacune des unités -[(A)-(X)]-,
   - Z représente un atome d'hydrogène ou un groupe -OH, -OR¹, - OM, -NH₂, -NHR¹, -N(R¹)₂, -N(R¹)₃⁺, -COOH, -COOM, -COOR¹, - OCOR¹, -CN, SO₃H, ou -SO₃M avec R¹ étant un radical alkyle en C₁ à C₄ et M un ion métallique ou encore Z représente un radical cyclocarbonate à 5 ou 6 chaînons,
   - Y représente un groupement -OH, -OR¹, -OM, -NH₂, -NHR¹, - N(R¹)₂, -N(R¹)₃⁺, -COOH, -COOM, -COOR¹, -OCOR¹, -CN, -SO₃H, ou -SO₃M avec R¹ étant un radical alkyle en C₁ à C₄ et M un ion métallique ou encore Y représente un radical cyclocarbonate à 5 ou 6 chaînons, ou
   - Y et Z sont liés l'un à l'autre pour former un motif polaire de type oxo, éther, ester, amino ou amine secondaire ou tertiaire.

La présente invention vise en outre un accumulateur, notamment une batterie de type Li-ion, comprenant un milieu électrolyte conforme à la présente invention.

De manière surprenante, les inventeurs ont découvert que l'association d'un agent solubilisant conforme à l'invention à un solvant hydrocarboné permet d'accéder à nouvel électrolyte doté d'une stabilité électrochimique significativement accrue et apte à solubiliser le ou les sels supports associés.

Cette aptitude est notamment reflétée par le fait que le milieu électrolyte selon l'invention est monophasique.

Au sens de l'invention, un milieu monophasique est un milieu dont l'examen microscopique ne permet pas de discerner plus d'une phase.

En d'autres termes, le sel support est présent à l'état de soluté dans le milieu électrolyte de l'invention. A ce titre le milieu électrolyte selon l'invention est différent d'une dispersion. Le sel support n'y est pas présent, en tout ou partie, à l'état particulaire.

Cette solubilité peut avoir nécessité un chauffage du milieu électrolyte de l'invention pour l'obtenir. En revanche, cet état de soluté atteint sous chauffage perdure au refroidissement du milieu électrolyte à la température ambiante.

Au sens de l'invention une température ambiante est une température de 20 °C+/- 2 °C.

D'autres caractéristiques, variantes et avantages de l'invention ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### SOLVANT HYDROCARBONE

Au sens de l'invention un solvant hydrocarboné est un composé liquide à température ambiante et pression atmosphérique formé en tout ou partie d'atomes de carbone et d'hydrogène.

Ainsi, un solvant hydrocarboné selon l'invention peut comprendre en outre des atomes d'oxygène, de soufre, de phosphore ou encore d'halogène.

Plus précisément, le solvant conforme à l'invention est choisi parmi les composés hydrocarbonés saturés, insaturés et/ou aromatiques, linéaires, ramifiés et/ou mono- ou poly-cycliques ayant de 6 à 18 atomes de carbone et dont l'enchaînement carboné peut le cas échéant être interrompu par un ou plusieurs hétéroatomes, notamment des atomes d'oxygène.

Selon une variante avantageuse, le solvant hydrocarboné est uniquement composé d'atomes de carbone et d'hydrogène.

Un solvant hydrocarboné convenant à l'invention est de préférence un hydrocarbure aliphatique, acyclique ou mono- ou poly-cyclique ou aromatique.

Par exemple, il peut être choisi parmi les solvants n-octane, 2-méthylheptane, 3-méthylheptane, 4-méthylheptane, 3-éthylhexane, 2,2-diméthylhexane, 2,3-diméthylhexane, 2,4-diméthylhexane, 2,5-diméthylhexane, 3,3-diméthylhexane, 3,4-diméthylhexane, 2-méthyl-3-éthylpentane, 3-méthyl-3-éthylpentane, 2,3,3-triméthylpentane, 2,3,4-triméthylpentane, 2,2,3-triméthylpentane, 2,2,4-triméthylbutane, 2,2,3,3-tétraméthylbutane, n-nonane, 2,2,5-triméthylhexane, n-décane, n-dodécane, 1-octène, 1-nonène, 1-decène, méthylcyclohexane, éthylcyclohexane, p-menthane, bicyclohexyle, a-pinène, dipentène, décaline, tétraline, toluène, xylène, éthylbenzène, méthyléthylbenzène, cumène, mésitylène, butylbenzène, cymène, cyclohexylbenzène, diéthylbenzène, pentylbenzène, dipentylbènzene, et leurs mélanges.

Dans le cadre de la présente invention, les solvants hydrocarbonés peuvent être utilisés individuellement ou en combinaison à deux ou plus.

De préférence, le milieu électrolyte comprend au moins un solvant hydrocarboné saturé ou insaturé ou aromatique.

Selon une variante avantageuse, ce solvant est saturé et comporte de préférence au moins 7 atomes de carbone, préférentiellement de 7 à 12 atomes de carbone.

A titre de solvants hydrocarbonés tout particulièrement avantageux selon cette variante, peuvent notamment être cités la décaline, l'octane, l'iso-octane et le cyclo-octane.

Selon une autre variante avantageuse, ce solvant est aromatique et comporte de préférence de 7 à 12 atomes de carbone.

A titre de solvant hydrocarboné tout particulièrement avantageux selon cette variante, peut notamment être cité le toluène.

Avantageusement, le solvant hydrocarboné ou mélange de solvants hydrocarbonés constitue de 20 à 80 % du volume total du milieu électrolyte.

Préférentiellement, le solvant hydrocarboné ou mélange de solvants hydrocarbonés constitue 80 % du volume total du milieu électrolyte.

### AGENT SOLUBILISANT

L'agent solubilisant requis selon l'invention est déterminant pour accéder à un milieu électrolyte monophasique à partir d'un mélange contenant au moins un solvant liquide hydrocarboné et au moins un sel support, et qui sont naturellement dénués d'affinités l'un pour l'autre.

L'agent solubilisant conforme à l'invention permet notamment de solubiliser le sel support et de garantir à celui-ci un état soluté même en mélange avec le ou les solvants hydrocarbonés parallèlement requis selon l'invention.

Par ailleurs, il ne doit pas affecter la stabilité électrochimique de ce milieu solvant hydrocarboné et dont il est recherché précisément à tirer profit selon l'invention.

L'agent solubilisant est un composé de formule (I) :

Z-[(A)-(X)]_{q}-(B)-Y (I)

dans laquelle :
A et B, identiques ou différents, ont pour formule -CₐH₂ₐ-, a étant un entier compris entre 6 et 18 ;
- X est choisi parmi les atomes d'oxygène et de soufre, et les radicaux -N(R²)-, -B(R²)- et -P(R³R²)- avec R² et R³, identiques ou différents, représentant un atome d'hydrogène ou un radical alkyle en C₁ à C₄,
- q est égal à zéro ou est un entier variant de 1 à 8 avec A et X pouvant posséder des définitions, identiques ou différentes, dans chacune des unités -[(A)-(X)]-,
- Z représente un atome d'hydrogène ou un groupe -OH, -OR¹, -OM, - NH₂, -NHR¹, -N(R¹)₂, -N(R¹)₃⁺, -COOH, -COOM, -COOR¹, -OCOR¹, -CN, - SO₃H, ou -SO₃M avec R¹ étant un radical alkyle en C₁ à C₄ et M un ion métallique ou encore Z représente un radical cyclocarbonate à 5 ou 6 chaînons,
- Y représente un groupement -OH, -OR¹, -OM, -NH₂, -NHR¹, -N(R¹)₂, -N(R¹)₃⁺, -COOH, -COOM, -COOR¹, -OCOR¹, -CN, -SO₃H, ou -SO₃M avec R¹ étant un radical alkyle en C₁ à C₄ et M un ion métallique ou encore Y représente un radical cyclocarbonate à 5 ou 6 chaînons, ou
- Y et Z sont liés l'un à l'autre pour former un motif polaire de type oxo, éther, ester, amino ou amine secondaire ou tertiaire.

Avantageusement, cet agent solubilisant est polaire notamment au regard du fait qu'il possède à travers la définition de Y au moins un groupement polaire tel que défini ci-dessus.

C'est notamment au regard de la présence d'un tel motif, que l'agent solubilisant manifeste une affinité pour le ou les sels supports auxquels il est associé.

A l'inverse, c'est son squelette hydrocarboné qui lui procure une affinité pour le solvant hydrocarboné associé.

Avantageusement, le composé de formule (I) est saturé.

Avantageusement, les radicaux A et B, identiques ou différents, ont pour formule -CₐH₂ₐ-, a étant un entier compris entre 6 et 12.

Selon une première variante, le composé de formule (I) est linéaire et saturé.

En particulier, il est en C₆ à C₁₈, notamment en C₇ à C₁₈.

De préférence, q est égal à zéro.

De préférence, Z représente un atome d'hydrogène.

Plus préférentiellement Y est choisi parmi les groupements -OH, -OR¹, - OM, -NH₂, -NHR¹, -N(R¹)₂, -N(R¹)₃⁺, -COOH, -COOM, -COOR¹, -OCOR¹, et -CN avec M et R¹ étant tels que définis ci-dessus ou Y est un radical cyclocarbonate en C₅ ou C₆.

Des composes spécifiques représentatifs de cette variante sont notamment les alcanols, les esters d'alkyles, les nitriles et les alkylcycloalkylcarbonates.

Par exemple, il peut s'agir de l'octanol, l'iso-octanol, l'hexanol, d'esters tels que l'acétate d'octyle, l'acétate d'hexyle, de nitriles tels que le nonane nitrile, et de carbonates tels que le carbonate d'octyléthylène.

Selon une autre variante, le composé de formule (I) est cyclique et avantageusement saturé.

En particulier, il est en C₆ à C₁₈.

De préférence, q est différent de zéro et X est avantageusement un atome d'oxygène.

Dans cette variante, Y et Z sont liés de manière covalente et forment de préférence un motif oxyde ou une fonction éther, ou un motif amine.

A titre représentatif de cette variante de composés peuvent notamment être cités les éthers couronnes et les tétraazacyclohexadécane (famille de cyclames).

D'une manière générale, la quantité en agent solubilisant est ajustée en présence du solvant hydrocarboné et du sel support considérés conjointement pour accéder à un milieu monophasique garant de la solubilité du sel.

En particulier, le solvant hydrocarboné et l'agent solubilisant hydrocarboné peuvent être mis en œuvre dans un rapport volumique ou massique solvant hydrocarboné/agent solubilisant compris entre 6/1 et 2/1, en particulier compris entre 5/1 et 3/1, et plus particulièrement d'environ 4/1.

L'obtention d'un milieu électrolyte monophasique conforme à l'invention peut être visualisée à l'œil nu mais également être contrôlée par mesure de la conductivité du mélange liquide formé qui doit atteindre une valeur optimale. Un protocole de mesure approprié, notamment par spectroscopie d'impédance, pour évaluer cette valeur est illustré dans les exemples ci-après.

Bien entendu, le choix de l'agent solubilisant est avantageusement effectué en considérant sa compatibilité physico-chimique avec le solvant hydrocarboné et le sel support devant y être dissous. Cette sélection relève clairement des compétences de l'homme du métier.

S'avèrent notamment compatibles des solvants hydrocarbonés et des agents solubilisants, possédant respectivement un squelette hydrocarboné saturé ou insaturé, acyclique ou cyclique, et dont les nombres de carbone respectifs diffèrent de moins de 5 atomes de carbone et de préférence de moins de 3 atomes de carbone.

Ainsi, il peut être avantageux de considérer un agent solubilisant de type alcanol acyclique, ester d'alkyle, nitrile ou alkylcycloalkyl carbonate en C₆ à C₁₂ lorsque le solvant hydrocarboné conjointement considéré est un hydrocarbure en C₆ à C₁₂ tel que par exemple la décaline, l'octane, l'iso-octane, le cyclo-octane, ou le toluène.

Il peut être avantageux de les combiner dans un rapport volumique ou massique solvant hydrocarboné/agent solubilisant variant de 50/5 à 30/20, en particulier de 6/1 à 2/1, notamment de 5/1 à 3/1 et de préférence égal à environ 4/1.

A titre de couples solvant hydrocarboné/agent solubilisant convenant à l'invention peuvent notamment être cités les couples décaline/octanol, octane/octanol, décaline/hexanol, iso-octane/iso-octanol, cyclooctane/octanol, décaline/acétate d'octyle, octane/acétate d'octyle, octane/nonane nitrile, décaline/carbonate d'octyléthylène, et toluène/acétate d'octyléthylène, octane/iso-octanol, iso-octane/nonane nitrile et toluène/carbonate d'octyléthylène.

Comme précisé ci-dessus le milieu électrolyte selon l'invention comprend de 1 à 50 %, de préférence de 5 à 25 %, de son volume total en agent(s) solubilisant(s).

### SEL SUPPORT

Le sel support contenu dans le milieu électrolyte selon l'invention est un sel de métal alcalin ou alcalino- terreux et de préférence de lithium.

Il est avantageusement constitué par un sel comportant au moins le cation Li⁺. Le sel est, par exemple, choisi parmi LiClO₄, LiAsF₆, LiPF₆, LiBF₄, LiR_{F}SO₃, LiCH₃SO₃, LiN(R_{F}SO₂)₂, LiC(R_{F}SO₂)₃, et C₆F₃LiN₄ (lithium 2-trifluoromethyl-4,5-dicyanoimidazole) ; R_{F} étant choisi parmi un atome de fluor et un groupement perfluoroalkyle comportant entre 1 et 8 atomes de carbone.

La quantité en sel support dans le milieu électrolyte selon l'invention est ajustée pour optimiser la conductivité ionique de l'électrolyte. Pour des raisons évidentes, cette quantité est donc susceptible de varier en fonction de la nature chimique du sel support considéré.

Toutefois, cette quantité varie généralement de 0,1 à 5 mol/L, notamment pour les sels de lithium, dans le milieu électrolyte.

A titre de milieux électrolytes conformes à l'invention particulièrement avantageux, peuvent notamment être cités ceux comprenant au moins :
- un solvant hydrocarboné choisi parmi les solvants décaline, octane, iso-octane, cyclo-octane, toluène et leurs mélanges,
- un agent solubilisant choisi parmi l'octanol, l'hexanol, l'iso-octanol, l'acétate d'octyle, le nonane nitrile, le carbonate d'octyléthylène, l'acétate d'octyléthylène et leurs mélanges, en particulier dans un rapport volumique ou massique solvant hydrocarboné/agent solubilisant compris entre 6/1 et 2/1, en particulier compris entre 5/1 et 3/1, et plus particulièrement d'environ 4/1 ; et
- du LiTFSI à titre de sel support, notamment à une concentration molaire comprise de 0,1 à 1,0 mol/L dans le milieu électrolyte.

En particulier, peuvent être cités les milieux électrolytes comprenant au moins :
- un solvant hydrocarboné choisi parmi les solvants décaline, octane, iso-octane, cyclo-octane, toluène et leurs mélanges,
- un agent solubilisant choisi parmi l'octanol, l'acétate d'octyle, le nonane nitrile, le carbonate d'octyléthylène et leurs mélanges dans un rapport volumique ou massique solvant hydrocarboné/agent solubilisant de 4/1, et
- du LiTFSI à titre de sel support, notamment à une concentration molaire comprise de 0,1 à 1,0 mol/L dans le milieu électrolyte.

### APPLICATIONS

La présente invention concerne le domaine des générateurs électrochimiques au lithium, qui fonctionnent selon le principe d'insertion ou de désinsertion, ou autrement dit intercalation-désintercalation, de lithium dans au moins une électrode.

Elle concerne plus particulièrement un accumulateur électrochimique au lithium comportant au moins une cellule électrochimique constituée d'une anode et d'une cathode, de part et d'autre d'un séparateur imprégné d'électrolyte, de deux collecteurs de courant dont un est relié à l'anode et l'autre à la cathode, et d'un boitier de forme allongée selon un axe longitudinal (X), le boitier étant agencé pour loger la cellule électrochimique avec étanchéité tout en étant traversé par une partie des collecteurs de courant formant les bornes de sortie, aussi appelés pôles.

En particulier, l'invention se rapporte à une batterie ou accumulateur Li-ion contenant un électrolyte conforme à l'invention.

Une telle batterie comporte usuellement au moins une cellule électrochimique constituée d'un séparateur imprégné d'un milieu électrolyte conforme à l'invention, entre une électrode positive ou cathode et une électrode négative ou anode, un collecteur de courant connecté à la cathode, et un collecteur de courant connecté à l'anode.

L'électrode positive ou cathode est généralement constituée de matériaux d'insertion du cation lithium qui sont en général composite, comme le phosphate de fer lithié LiFePO₄, l'oxyde de cobalt lithié LiCoO₂, l'oxyde manganèse lithié, éventuellement substitué, LiMn₂O₄ ou un matériau à base de LiNiₓMn_{y}Co_{z}O₂ avec x+y+z = 1, tel que LiNi_{0.33}Mn_{0.33}Co_{0.33}O₂, ou un matériau à base de LiNiₓCo_{y}Al_{z}O₂ avec x+y+z = 1, LiNiMnCoO₂ ou l'oxyde de nickel cobalt aluminium lithié LiNiCoAlO₂.

L'électrode négative ou anode est généralement constituée de carbone, de graphite ou de Li₄TiO₅O₁₂ (matériau titanate), éventuellement de silicium ou de lithium, ou d'étain et de leurs alliages ou de composite formé à base de silicium.

L'anode et la cathode en matériau d'insertion au lithium peuvent être déposées selon une technique usuelle sous la forme d'une couche active sur une feuille métallique constituant un collecteur de courant.

Le collecteur de courant connecté à l'électrode positive est en général en aluminium.

Le collecteur de courant connecté à l'électrode négative est en général en cuivre, en cuivre nickelé ou en aluminium.

Traditionnellement, une batterie ou accumulateur Li-ion utilise un couple de matériaux à l'anode et à la cathode lui permettant de fonctionner à un niveau de tension élevé, typiquement autour de 3,6 V.

### FIGURES

Figure 1 : Courbes de voltammétrie cyclique en solution de 05DOol et 05Ool (électrode de travail : 3 mm carbone vitreux, contre-électrode : fil de platine, électrode de référence Ag⁰/Ag⁺, 0,01 M AgNO₃/0,1 M TBAPF₆/CH₃CN fraichement préparée, *E vs* Li⁺/Li⁰ = 3,53 V *vs* Ag⁰/Ag⁺, 100 mV.s⁻¹) (Lu et al. J. Electrochem. Soc. 2010, 157 (9), A1016).
Figure 2 : Courbes de voltammétrie cyclique en solution de 06DOyl, 06OOyl et 07Oyl dans les conditions expérimentales précisées pour la Figure 1.
Figure 3 : Courbes de voltammétrie cyclique en pile bouton de 06TOEC (électrode de travail : cale en inox, contre-électrode : Li métal, séparateur Clegard®, 0,1 mV.s⁻¹).
Figure 4 : Courbes de voltammétrie cyclique en pile bouton de 06TOEC (électrode de travail SuperP:PVDF = 80:20 (en masse), contre-électrode : Li métal, séparateur Clegard®, 0,1 mV.s⁻¹).

### MATERIEL ET METHODES

Les mesures de conductivité ont été réalisées à l'aide d'un conductimètre thermostaté à 12 cellules MMultyConductimeter de chez MaterialsMates. La cellule de mesure est remplie avec 1 mL d'électrolyte, puis elle est connectée et posée dans un bain de sable thermostaté à 22 °C. Les mesures sont effectuées pendant 2h.

Les mesures d'électrochimie en solution ont été effectuées dans une cellule électrochimique à 3 électrodes (électrode de travail : 3 mm carbone vitreux, contre-électrode : fil de platine, électrode de référence Ag⁰/Ag⁺, 0,01 M AgNO₃/0,1 M TBAPF₆/CH₃CN fraichement préparée, E *vs* Li⁺/Li⁰ = 3,53 V *vs* Ag⁰/Ag⁺, TBA = tétrabutyl ammonium).

Une électrode contenant 80 % en masse de SuperP (Imerys *Graphite & Carbon* Super C65) et 20 % en masse de liant PVDF (fluorure de polyvinylidène) est réalisée selon le protocole suivant.

400 mg de SuperP sont mélangés avec 950 mg d'une solution à 12 % en masse de PVDF dans la NMP (N-méthylpyrrolidinone), puis 6,15 g de NMP additionnelle sont ajoutés. Le mélange ainsi obtenu est dispersé au Dispermat à 2 000 rpm pendant 20 min puis à 5 000 rpm pendant 5 min. L'encre ainsi obtenue est enduite (1 = 200 µm) grâce à un banc d'enduction sur un feuillard d'aluminium puis séchée dans une étuve à 55 °C. L'électrode ainsi obtenue est découpée en pastille de 14 mm de diamètre et pressée à 10 tonnes avant d'être séchée sous vide pendant 48h à 80 °C.

Une batterie utilisant l'électrode ainsi réalisée est assemblée en boite à gants avec une contre-électrode en lithium métal selon le protocole suivant.

L'électrode réalisée est empilée en vis-à-vis d'une électrode en lithium métal de 16 mm de diamètre ou d'une cale en inox, toutes 2 séparées par une membrane Celgard® 2400 (à base de polypropylène). L'ensemble est ensuite imbibé de l'électrolyte étudié puis sertie dans une pile bouton en inox.

Le sel support est le LiTFSI commercialisé par Rhodia Asia Pacific.

Différents tests de solubilité de LiTFSI ont été réalisés dans un mélange solvant hydrocarboné:agent solubilisant (4:1 en masse) et les mélanges contenant un maximum de sel support (LiTFSI) ont été caractérisés par mesures de conductivité ionique, et/ou électrochimie en solution ou électrochimie en pile bouton.

### EXEMPLE 1

3,59 g LiTFSI sont dissous dans 25 mL décaline:octanol (4:1 en masse), ce mélange correspond à une concentration de sel dissous de 0,5 M.

Cet électrolyte est référencé ci-après 05DOol.

### EXEMPLE 2

3,59 g LiTFSI sont dissous dans 25 mL octane:octanol (4:1 en masse), ce mélange correspond à une concentration de sel dissous de 0,5 M.

Cet électrolyte est référencé ci-après 05OOol.

### EXEMPLE 3 (TEMOIN)

3,59 g LiTFSI sont dissous dans 25 mL octanol, ce mélange correspond à une concentration de sel dissous de 0,5 M.

Cet électrolyte est référencé ci-après 05Ool.

### EXEMPLE 4

2,15 g LiTFSI sont dissous dans 25 mL décaline:hexanol (4:1 en masse), ce mélange correspond à une concentration de sel dissous de 0,3 M.

Cet électrolyte est référencé ci-après 03DHol

### EXEMPLE 5

4,31 g LiTFSI sont dissous dans 25 mL décaline:acétate d'octyle (4:1 en masse), ce mélange correspond à une concentration de sel dissous de 0,6 M.

Cet électrolyte est référencé ci-après 06DOyl.

### EXEMPLE 6

4,31 g LiTFSI sont dissous dans 25 mL octane:acétate d'octyle (4:1 en masse), ce mélange correspond à une concentration de sel dissous de 0,6 M.

Cet électrolyte est référencé ci-après 06OOyl.

### EXEMPLE 7 (TEMOIN)

5,02 g LiTFSI sont dissous dans 25 mL acétate d'octyle, ce mélange correspond à une concentration de sel dissous de 0,7 M.

Cet électrolyte est référencé ci-après 07Oyl.

### EXEMPLE 8

0,86 g LiTFSI sont dissous dans 4 mL iso-octane:iso-octanol (4:1 en masse), ce mélange correspond à une concentration de sel dissous de 0,6 M.

Cet électrolyte est référencé ci-après 06iOiOol.

### EXEMPLE 9

0,72 g LiTFSI sont dissouts dans 4 mL octane:iso-octanol (4:1 en masse), ce mélange correspond à une concentration de sel dissout de 0,5 M.

Cet électrolyte est référencé ci-après 05OiOol.

### EXEMPLE 10

0,86 g LiTFSI sont dissous dans 4 mL cyclo-octane:octanol (4:1 en masse), ce mélange correspond à une concentration de sel dissous de 0,6 M.

Cet électrolyte est référencé ci-après 06cOOol.

### EXEMPLE 11

0,43 g LiTFSI sont dissous dans 4 mL octane:nonanenitrile (4:1 en masse), ce mélange correspond à une concentration de sel dissous de 0,3 M.

Cet électrolyte est référencé ci-après 03OOcn.

### EXEMPLE 12

0,86 g LiTFSI sont dissous dans 4 mL toluène:carbonate d'octyléthylène (4:1 en masse), ce mélange correspond à une concentration de sel dissous de 0,6 M.

Cet électrolyte est référencé ci-après 06TOEC.

### EXEMPLE 13 (TEMOIN)

0,14 g LiTFSI (correspondant à 0,1 M) sont dissous dans 5 g toluène, ce mélange est insoluble.

### EXEMPLE 14

Les conductivités ioniques de milieux électrolytes conformes à l'invention ont été mesurées à température ambiante selon le protocole décrit précédemment et les résultats obtenus figurent dans le tableau 1 ci-après.

**Tableau 1**

| Exemple | Référence | Conductivité ionique (mS.cm⁻¹) |
|---|---|---|
| 1 | 05DOol | 0,01 |
| 2 | 05OOol | 0,06 |
| 5 | 06DOyl | 0,05 |
| 6 | 06OOyl | 0,10 |
| 12 | 06TOEC | 0,12 |

Une conductivité ionique satisfaisante a ainsi été mesurée pour les milieux électrolytes conformes à l'invention (une conductivité ionique satisfaisante s'établit à partir de 0,001 mS.cm⁻¹, de préférence à partir de 0,1 mS.cm⁻¹). Les milieux électrolytes des exemples 2, 5, 6 et 12 se révèlent tout particulièrement intéressants.

### EXEMPLE 15

Les courbes de voltammétrie cyclique ont été établies pour certains milieux électrolytes exemplifiés dans les conditions décrites ci-dessus.

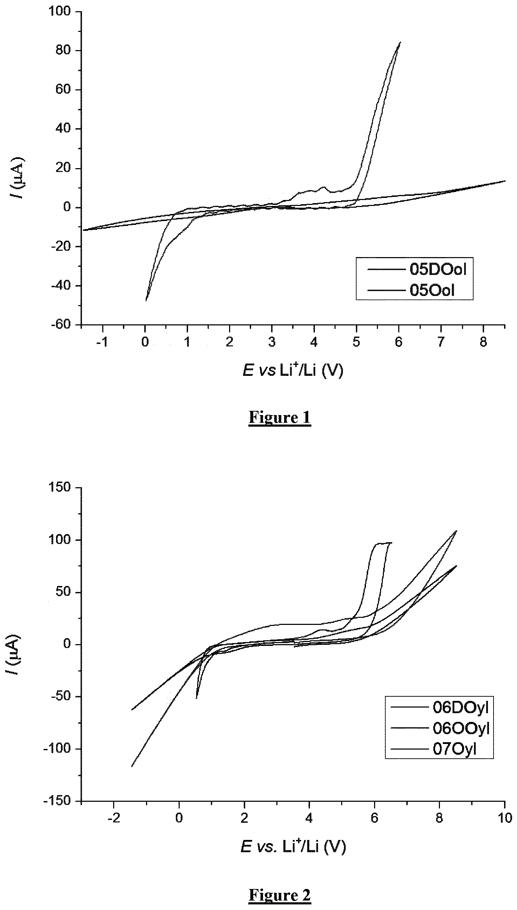

Ainsi la figure 1 représente la courbe de voltammétrie cyclique réalisée en solution de l'électrolyte 05DOol de l'exemple 1 par comparaison à celle de l'électrolyte témoin 05Ool de l'exemple 3. Il y est effectivement constaté un gain d'efficacité de l'électrolyte selon l'invention en matière d'amplitude de la plage de potentiel par rapport à l'électrolyte témoin.

La figure 2 représente les courbes de voltammétrie cyclique des électrolytes 06DOyl et 06OOyl des exemples 5 et 6 par comparaison à celle de l'électrolyte témoin 06Oyl de l'exemple 7. Il y est également constaté un gain d'efficacité des électrolytes selon l'invention en matière d'amplitude de la plage de potentiel par rapport à l'électrolyte témoin.

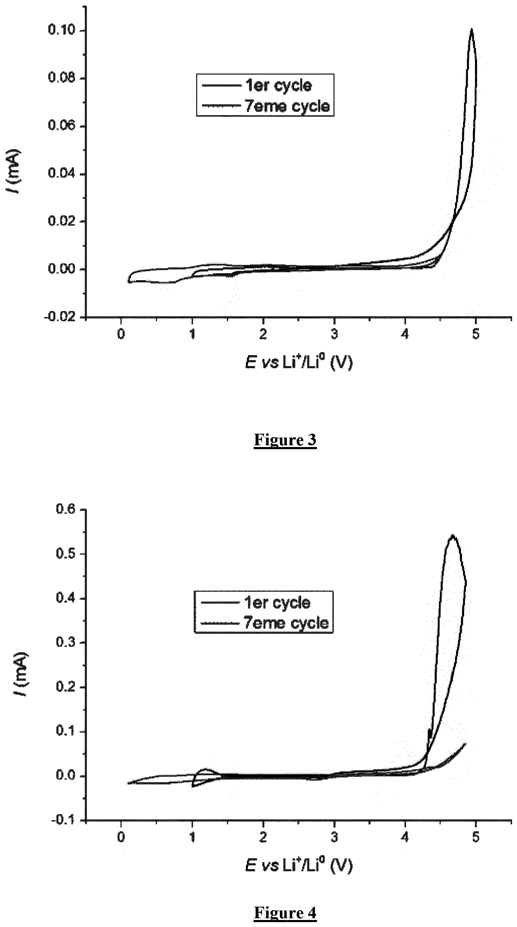

Les figures 3 et 4 représentent les courbes de voltammétrie cyclique de l'électrolyte 06TOEC dans une pile bouton, avec une électrode de travail en cale d'inox et une électrode de travail composite SuperP:PVDF. Il y est constaté que cet électrolyte montre une plage de stabilité d'environ 5 V.

## Revendications

1. Milieu électrolyte monophasique comprenant :
- au moins un sel de métal alcalin ou alcalino-terreux, de préférence un sel de lithium,
- au moins un solvant hydrocarboné, et
- de 1 à 50 %, en volume par rapport au volume total dudit milieu, d'au moins un agent solubilisant hydrocarboné, distinct dudit solvant hydrocarboné, répondant à la formule (I)
Z-[(A)-(X)]_{q}-(B)-Y (I)
dans laquelle :
- A et B, identiques ou différents, ont pour formule -CₐH₂ₐ-, a étant un entier compris entre 6 et 18,
- X est choisi parmi les atomes d'oxygène et de soufre, et les radicaux -N(R²)-, -B(R²)- et -P(R³R²)- avec R² et R³, identiques ou différents, représentant un atome d'hydrogène ou un radical alkyle en C₁ à C₄,
- q est égal à zéro ou est un entier variant de 1 à 8 avec A et X pouvant posséder des définitions, identiques ou différentes, dans chacune des unités -[(A)-(X)]-,
- Z représente un atome d'hydrogène, ou un groupe -OH, -OR¹, -OM, -NH₂, -NHR¹, -N(R¹)₂, -N(R¹)₃⁺, -COOH, -COOM, -COOR¹, -OCOR¹, -CN, -SO₃H, ou -SO₃M avec R¹ étant un radical alkyle en C₁ à C₄ et M un ion métallique ou encore Z est un radical cyclocarbonate à 5 ou 6 chaînons,
- Y représente un groupement -OH, -OR¹, -OM, -NH₂, -NHR¹, -N(R¹)₂, -N(R¹)₃⁺, -COOH, -COOM, -COOR¹, -OCOR¹, -CN, -SO₃H, ou -SO₃M avec R¹ étant un radical alkyle en C₁ à C₄ et M un ion métallique ou encore Y est un radical cyclocarbonate à 5 ou 6 chaînons, ou
- Y et Z sont liés l'un à l'autre pour former un motif polaire de type oxo, éther ou ester, amino ou amine secondaire ou tertiaire.

2. Milieu électrolyte selon la revendication précédente, dans lequel le solvant hydrocarboné est un hydrocarbure aliphatique, acyclique ou mono- ou poly-cyclique ou aromatique.

3. Milieu électrolyte selon la revendication 1 ou 2, dans lequel le solvant hydrocarboné est saturé et comporte de préférence au moins 7 atomes de carbone, préférentiellement de 7 à 12 atomes de carbone, et en particulier est choisi parmi la décaline, l'octane, l'iso-octane, et le cyclo-octane.

4. Milieu électrolyte selon la revendication 1 ou 2, dans lequel le solvant hydrocarboné est aromatique et comporte de préférence de 7 à 12 atomes de carbone, et en particulier est le toluène.

5. Milieu électrolyte selon l'une quelconque des revendications précédentes, dans lequel les radicaux A et B, identiques ou différents, ont pour formule -CₐH₂ₐ-, a étant un entier compris entre 6 et 12.

6. Milieu électrolyte selon l'une quelconque des revendications précédentes, dans lequel l'agent solubilisant de formule (I) est linéaire et saturé et est de préférence en C₇ à C₁₈ avec plus préférentiellement q égal à zéro.

7. Milieu électrolyte selon la revendication précédente, dans lequel l'agent solubilisant de formule (I) est choisi parmi les alcanols, les esters d'alkyle, les nitriles et les alkylcycloalkylcarbonates.

8. Milieu électrolyte selon l'une quelconque des revendications précédentes, dans lequel l'agent solubilisant est choisi parmi l'octanol, l'iso-octanol, l'hexanol, l'acétate d'octyle, l'acétate d'hexyle, le nonane nitrile et le carbonate d'octyléthylène.

9. Milieu électrolyte selon l'une quelconque des revendications précédentes, comprenant au moins un agent solubilisant en C₆ à C₁₂ de type alcanol acyclique, ester d'alkyle, nitrile ou alkylcycloalkylcarbonate, et un solvant hydrocarboné en C₆ à C₁₂ de type hydrocarbure, notamment dans un rapport volumique solvant hydrocarboné/agent solubilisant compris entre 6/1 et 2/1, en particulier compris entre 5/1 et 3/1, et plus particulièrement égal à 4/1.

10. Milieu électrolyte selon l'une quelconque des revendications précédentes comprenant un couple solvant hydrocarboné/agent solubilisant choisi parmi les couples décaline/octanol, octane/octanol, décaline/hexanol, iso-octane/iso-octanol, cyclooctane/octanol, décaline/acétate d'octyle, octane/acétate d'octyle, octane/nonane nitrile, décaline/carbonate d'octyléthylène, et toluène/acétate d'octyléthylène, octane/iso-octanol, iso-octane/nonane nitrile et toluène/carbonate d'octyléthylène.

11. Milieu électrolyte selon l'une quelconque des revendications précédentes comprenant à titre de sel électrolytique au moins un composé choisi parmi LiClO₄, LiAsF₆, LiPF₆, LiBF₄, LiR_{F}SO₃, LiCH₃SO₃, LiN(R_{F}SO₂)₂, LiC(R_{F}SO₂)₃ et C₆F₃LiN₄ ; R_{F} étant choisi parmi un atome de fluor et un groupement perfluoroalkyle comportant entre 1 et 8 atomes de carbone.

12. Accumulateur électrochimique au lithium, de type Li-ion, comprenant au moins un milieu électrolyte selon l'une quelconque des revendications précédentes.

## Patentansprüche

1. Einphasiges Elektrolytmedium, umfassend:
- mindestens ein Alkali- oder Erdalkalimetallsalz, vorzugsweise ein Lithiumsalz,
- mindestens ein Kohlenwasserstoff-Lösungsmittel und
- 1 bis 50 Vol.-%, bezogen auf das Gesamtvolumen des Mediums, mindestens eines Kohlenwasserstoff-Solubilisierungsmittels, das von dem Kohlenwasserstoff-Lösungsmittel verschieden ist und der Formel (I) entspricht:
Z-[(A)-(X)]_{q}-(B)-Y (I)
in der:
- A und B gleich oder verschieden sind und die Formel -CₐH₂ₐ- aufweisen, wobei a eine ganze Zahl zwischen 6 und 18 ist,
- X aus Sauerstoff- und Schwefelatomen und den Resten -N(R²)-, -B(R²)- und -P(R³R²)- ausgewählt ist, wobei R² und R³ gleich oder verschieden sind und für ein Wasserstoffatom oder einen C₁- bis C₄-Alkylrest stehen,
- q gleich null ist oder eine ganze Zahl im Bereich von 1 bis 8 ist, wobei A und X in jeder der Einheiten -[(A)-(X)]- gleiche oder verschiedene Definitionen besitzen können,
- Z für ein Wasserstoffatom oder eine Gruppe -OH, -OR¹, -OM, -NH₂, -NHR¹, -N(R¹)₂, -N(R¹)₃⁺, -COOH,-COOM, -COOR¹, -OCOR¹, -CN, -SO₃H oder -SO₃M steht, wobei R¹ ein C₁- bis C₄-Alkylrest ist und M für ein Metallion steht, oder auch Z für einen 5-oder 6-gliedrigen Cyclocarbonatrest steht,
- Y für eine Gruppe -OH, -OR¹, -OM, -NH₂,-NHR¹, -N(R¹)₂, -N(R¹)₃⁺, -COOH, -COOM, -COOR¹,-OCOR¹, -CN, SO₃H oder -SO₃M steht, wobei R¹ ein C₁- bis C₄-Alkylrest ist und M für ein Metallion steht, oder auch Y für einen 5- oder 6-gliedrigen Cyclocarbonatrest steht, oder
- Y und Z unter Bildung einer polaren Einheit vom Typ Oxo, Ether oder Ester, Amino oder sekundäres oder tertiäres Amin miteinander verknüpft sind.

2. Elektrolytmedium nach dem vorhergehenden Anspruch, wobei es sich bei dem Kohlenwasserstoff-Lösungsmittel um einen aliphatischen, acyclischen oder mono- oder polycyclischen oder aromatischen Kohlenwasserstoff handelt.

3. Elektrolytmedium nach Anspruch 1 oder 2, wobei das Kohlenwasserstoff-Lösungsmittel gesättigt ist und bevorzugt mindestens 7 Kohlenstoffatome, vorzugsweise 7 bis 12 Kohlenstoffatome, enthält und insbesondere aus Decalin, Octan, Isooctan und Cyclooctan ausgewählt ist.

4. Elektrolytmedium nach Anspruch 1 oder 2, wobei das Kohlenwasserstoff-Lösungsmittel aromatisch ist und bevorzugt 7 bis 12 Kohlenstoffatome enthält und insbesondere Toluol ist.

5. Elektrolytmedium nach einem der vorhergehenden Ansprüche, wobei die Reste A und B gleich oder verschieden sind und die Formel -CₐH₂ₐ- aufweisen, wobei a eine ganze Zahl zwischen 6 und 12 ist.

6. Elektrolytmedium nach einem der vorhergehenden Ansprüche, wobei das Solubilisierungsmittel der Formel (I) linear und gesättigt ist und bevorzugt 7 bis 18 Kohlenstoffatome enthält, wobei weiter bevorzugt q gleich null ist.

7. Elektrolytmedium nach dem vorhergehenden Anspruch, wobei das Solubilisierungsmittel der Formel (I) aus Alkanolen, Alkylestern, Nitrilen und Alkylcycloalkylcarbonaten ausgewählt ist.

8. Elektrolytmedium nach einem der vorhergehenden Ansprüche, wobei das Solubilisierungsmittel aus Octanol, Isooctanol, Hexanol, Essigsäureoctylester, Essigsäurehexylester, Nonannitril und Octylethylencarbonat ausgewählt ist.

9. Elektrolytmedium nach einem der vorhergehenden Ansprüche, umfassend mindestens ein C₆- bis C₁₂-Solubilisierungsmittel vom Typ acyclisches Alkanol, Alkylester, Nitril oder Alkylcycloalkylcarbonat und ein C₆- bis C₁₂-Kohlenwasserstoff-Lösungsmittel vom Kohlenwasserstoff-Typ, insbesondere in einem Volumenverhältnis von Kohlenwasserstoff-Lösungsmittel zu Solubilisierungsmittel zwischen 6/1 und 2/1, insbesondere zwischen 5/1 und 3/1 und spezieller gleich 4/1.

10. Elektrolytmedium nach einem der vorhergehenden Ansprüche, umfassend ein Kohlenwasserstoff-Lösungsmittel/Solubilisierungsmittel-Paar, das aus den Paaren Decalin/Octanol, Octan/Octanol, Decalin/Hexanol, Isooctan/Isooctanol, Cyclooctan/Octanol, Decalin/Essigsäureoctylester, Octan/Essigsäureoctylester, Octan/Nonannitril, Decalin/Octylethylencarbonat, Toluol/Essigsäureoctylethylenester, Octan/Isooctanol, Isooctan/Nonannitril und Toluol/Octylethylencarbonat ausgewählt ist.

11. Elektrolytmedium nach einem der vorhergehenden Ansprüche, umfassend als Elektrolytsalz mindestens eine Verbindung, die aus LiClO₄, LiAsF₆, LiPF₆, LiBF₄, LiR_{F}SO₃, LiCH₃SO₃, LiN(R_{F}SO₂)₂, LiC(R_{F}SO₂)₃ und C₆F₃LiN₄ ausgewählt ist; wobei R_{F} aus einem Fluoratom und einer Perfluoralkylgruppe mit zwischen 1 und 8 Kohlenstoffatomen ausgewählt ist.

12. Elektrochemischer Lithium-Akkumulator vom Li-Ionen-Typ, umfassend mindestens ein Elektrolytmedium nach einem der vorhergehenden Ansprüche.

## Claims

1. A single phase electrolyte medium comprising:
- at least one salt of alkali or alkaline earth metal, preferably a lithium salt,
- at least one hydrocarbon solvent, and
- from 1% to 50%, by volume relative to the total volume of said medium, of at least one hydrocarbon solubilizing agent, distinct from said hydrocarbon solvent, corresponding to the formula (I):
Z-[(A)-(X)]_{q}-(B)-Y (I)
in which:
- A and B, identical or different, have the formula -CₐH₂ₐ-, where a is an integer between 6 and 18,
- X is chosen from among oxygen and sulfur atoms and the radicals -N(R²)-, -B(R²)- and -P(R³R²)- where R² and R³, identical or different, represent a hydrogen atom or an alkyl radical in C₁ to C₄,
- q is equal to zero or is an integer varying from 1 to 8, where A and X may have identical or different definitions in each of the units -[(A)-(X)]-,
- Z represents a hydrogen atom or a group -OH, -OR¹, -OM, -NH₂, -NHR¹, - N(R¹)₂, -N(R¹)₃⁺, -COOH, -COOM, -COOR¹, -OCOR¹, -CN, SO₃H, or - SO₃M, where R¹ is an alkyl radical in C₁ to C₄ and M is a metal ion, or alternatively Z is a cyclocarbonate radical with 5 or 6 links,
- Y represents a group -OH, -OR¹, -OM, -NH₂, -NHR¹, -N(R¹)2, -N(R¹)₃⁺,-COOH, -COOM, -COOR¹, -OCOR¹, -CN, -SO₃H, or -SO₃M where R¹ is an alkyl radical in C₁ to C₄ and M is a metal ion, or alternatively Y is a cyclocarbonate radical with 5 or 6 links, or
- Y and Z are linked to one another to form a polar pattern of the oxo, ether, ester, amino or secondary or tertiary amine type.

2. The electrolyte medium as claimed in the preceding claim, wherein the hydrocarbon solvent is an aliphatic, acyclic or mono- or polycyclic or aromatic hydrocarbon.

3. The electrolyte medium as claimed in claim 1 or 2, wherein the hydrocarbon solvent is saturated and preferably comprises at least 7 carbon atoms, preferably from 7 to 12 carbon atoms, and in particular is chosen from among decalin, octane, iso-octane and cyclo-octane.

4. The electrolyte medium as claimed in claim 1 or 2, wherein the hydrocarbon solvent is aromatic and preferably comprises 7 to 12 carbon atoms, and in particular is toluene.

5. The electrolyte medium as claimed in any of the preceding claims, wherein the radicals A and B, identical or different, have the formula -CₐH₂ₐ-, where a is an integer between 6 and 12.

6. The electrolyte medium as claimed in any of the preceding claims, wherein the solubilizing agent having the formula (I) is linear and saturated and is preferably in C₇ to C₁₈, and wherein, more preferably, q is equal to zero.

7. The electrolyte medium as claimed in the preceding claim, wherein the solubilizing agent having the formula (I) is chosen from among alkanols, alkyl esters, nitriles and alkyl cycloalkyl carbonates.

8. The electrolyte medium as claimed in any of the preceding claims, wherein the solubilizing agent is chosen from among octanol, iso-octanol, hexanol, octyl acetate, hexyl acetate, nonane nitrile and octylethylene carbonate.

9. The electrolyte medium as claimed in any of the preceding claims, comprising at least one solubilizing agent in C₆ to C₁₂ of the acyclic alkanol, alkyl ester, nitrile or alkyl cycloalkyl carbonate type, and a hydrocarbon solvent in C₆ to C₁₂ of the hydrocarbon type, notably in a ratio by volume of hydrocarbon solvent to solubilizing agent which is between 6/1 and 2/1, in particular between 5/1 and 3/1, and more particularly equal to 4/1.

10. An electrolyte medium as claimed in any of the preceding claims, comprising a hydrocarbon solvent/solubilizing agent pair chosen from among decalin/octanol, octane/octanol, decalin/hexanol, iso-octane/iso-octanol, cyclooctane/octanol, decalin/octyl acetate, octane/octyle acetate, octane/nonane nitrile, decalin/octylethylene carbonate, and toluene/octylethylene acetate, octane/iso-octanol, iso-octane/nonane nitrile and toluene/octylethylene carbonate pairs.

11. The electrolyte medium as claimed in any of the preceding claims, comprising, as an electrolyte salt, at least one compound chosen from among LiClO₄, LiAsF₆, LiPF₆, LiBF₄, LiR_{F}SO₃, LiCH₃SO₃, LiN(R_{F}SO₂)₂, LiC(R_{F}SO₂)₃, and C₆F₃LiN₄ ; R_{F} being chosen from among a fluorine atom and a perfluoroalkyl group comprising between 1 and 8 carbon atoms.

12. An electrochemical lithium accumulator of the Li-ion type, comprising at least one electrolyte medium as claimed in any of the preceding claims.
